# EUROPÄISCHE PATENTSCHRIFT

(11) **EP 1 735 194 B1**
(45) Veröffentlichungstag und Bekanntmachung des Hinweises auf die Patenterteilung: **20.08.2008**
(21) Anmeldenummer: 05716692.8
(22) Anmeldetag: 14.02.2005
(51) Int. Cl.: B60S 1/04

(54) **SCHEIBENWISCHVORRICHTUNG, INSBESONDERE FÜR EIN KRAFTFAHRZEUG**
WINDSHIELD WIPER, ESPECIALLY FOR A MOTOR VEHICLE
SYSTEME D'ESSUIE-GLACE, NOTAMMENT POUR VEHICULE AUTOMOBILE

(30) Priorität: 06.04.2004 DE 102004016810
(43) Veröffentlichungstag der Anmeldung: 27.12.2006
(73) Patentinhaber: ROBERT BOSCH GMBH, 70442 Stuttgart (DE)
(72) Erfinder: KRAUS, Achim, 77815 Buehl (DE); ALBRECHT, Gerard, F-67690 Hatten (FR); BOHN, Roland, 77815 Buehl (DE); SCHABANEL, Francois, F-94100 Saint Maux des Fossés (FR); FRIDERICHS, Guenther, 77830 Buehlertal (DE); PIERRON, Didier, F-67380 Lingolsheim (FR)
(86) Internationale Anmeldenummer: PCT/EP2005/050643
(87) Internationale Veröffentlichungsnummer: WO 2005/097565

(56) Entgegenhaltungen:
- WO-A-00/06429
- WO-A-03/051690
- WO-A-20/04089707
- US-A- 6 027 157

## Beschreibung

### Stand der Technik

Die Erfindung geht von einer Scheibenwischvorrichtung, insbesondere für ein Kraftfahrzeug, nach dem Oberbegriff des Anspruchs 1 aus.

Es sind schon zahlreiche Scheibenwischvorrichtungen für Kraftfahrzeuge bekannt, die ein Antriebselement aufweisen, das an der Fahrzeugkarosserie befestigt ist. Typischerweise werden derartige Antriebselemente an der Fahrzeugkarosserie festgeschraubt, was jedoch sehr aufwändig ist und viele Teile, wie Schrauben, Schraubenmuttern und Unterlegscheiben usw. benötigt. Dies ist logistisch aufwändig und darüber hinaus komplex beim Einbau. Weiterhin ist aus der DE 100 62 617 A1 eine Scheibenwischvorrichtung bekannt, die in das Kraftfahrzeug eingeklebt ist, wobei der Klebstoff dämpfende Eigenschaften aufweist.

Aus der DE 198 33 404 A1 ist eine Scheibenwischanlage für Fahrzeuge, insbesondere Kraftfahrzeuge, bekannt, die eine verschraubungsfreie und damit einfach und schnell durchzuführende Montage ermöglicht. Hierzu weist die Scheibenwischanlage eine Tragkonstruktion für eine Antriebsvorrichtung auf. An der Tragkonstruktion ist eine Anzahl erster Befestigungselemente vorgesehen, die in eine erste Richtung von der Tragkonstruktion abragen. In eine zweite Richtung, die in einem Winkel zwischen 45 und 135 Grad zu der ersten Richtung verläuft, vorzugsweise in einem Winkel von 90 Grad, ragen eine Anzahl zweiter Befestigungselemente. Die Befestigungselemente sind als zylindrische Steckzapfen ausgebildet, die mit einem Ende mit der Tragkonstruktion verbunden sind und mit ihrem freien Ende in eine Aufnahmeöffnung eines gummielastischen Dämpfungselements gesteckt werden. Dieses ist in eine Montageöffnung der Fahrzeugkarosserie eingesetzt. Die Montageöffnung kann sich in einer abgewinkelten oder tief gezogenen Lasche befinden, die an der Fahrzeugkarosserie angeschweißt ist. Das freie Ende des Steckzapfens kann eine vorzugsweise konische Verdickung besitzen, um dasselbe in dem Dämpfungselement durch Verrasten festlegen zu können. Da die Montagerichtungen der ersten und zweiten Befestigungselemente unter einem Winkel verlaufen, ist es nicht ausgeschlossen, dass die Tragkonstruktion nach der Montage unter einer Spannung steht, die sich auf die angrenzenden Teile der Fahrzeugkarosserie überträgt.

### Vorteile der Erfindung

Nach der Erfindung sind die Dämpfungselemente Befestigungsblöcke aus einem gummielastischen Werkstoff. Sie sind am Antriebselement befestigt und derart angeordnet, dass sie in einer ersten Montagerichtung in Aufnahmeöffnungen einsetzbar sind und durch eine Bewegung in einer zweiten Montagerichtung quer zur ersten den Rand der Aufnahmeöffnungen mit Schlitzen übergreifen. Die Schlitze aller Befestigungsblöcke und die Aufnahmeöffnungen liegen in einer Ebene oder in Ebenen, die parallel zueinander in der ersten Montagerichtung versetzt sind. Die Befestigungsblöcke halten mit ihren Schlitzen das Antriebselement in den Aufnahmeöffnungen fest, während ein Arretierungselement die Endlage der Befestigungsblöcke in der zweiten Montagerichtung sichert und somit verhindert, dass sich die Befestigungsblöcke nach der Montage in der zweiten Montagerichtung zurückbewegen können und außer Eingriff geraten. Die Aufnahmeöffnung kann unmittelbar durch eine Öffnung im Karosserieblech oder in einer Halterung gebildet werden, die auf das Karosserieblech aufgesetzt ist, z.B. geschweißt ist.

Die zweite Montagebewegung verläuft in einer Ebene quer zur ersten Montagerichtung. Damit die Abtriebswelle des Antriebselements ihre Lage bei dieser Bewegung im Wesentlichen beibehält, ist es zweckmäßig, dass sie ebenfalls in der ersten Montagerichtung verläuft und die Befestigungselemente im Wesentlichen auf Tangenten eines Kreises oder konzentrischer Kreise um die Abtriebswelle oder eine zu dieser im Wesentlichen parallelen Achse angeordnet sind. Die Bewegung in der zweiten Montagerichtung ist dann eine Drehbewegung um die Abtriebswelle oder die parallele Achse.

Das Arretierungselement ist ein im Querschnitt länglicher Bolzen, der an seinem Umfang eine dämpfende Schicht aufweist. Im montierten Zustand steckt er in einem Langloch im Antriebselement und in einer Montageöffnung der Fahrzeugkarosserie. Das Langloch bzw. die Montageöffnung erstreckt sich quer zur zweiten Montagerichtung, also im Wesentlichen radial zur Abtriebswelle, wenn die Bewegung in der zweiten Montagerichtung eine Drehbewegung um die Abtriebswelle ist. Die dämpfende Schicht liegt in der zweiten Montagerichtung an den Rändern des Langlochs bzw. der Montageöffnung an, sodass im montierten Zustand das Antriebselement von der Fahrzeugkarosserie schwingungstechnisch entkoppelt und in dieser Lage fixiert ist. In der Richtung quer zur zweiten Montagerichtung kann für den Toleranzausgleich ein Spiel vorgesehen werden.

Die dämpfende Schicht besteht aus einem gummielastischen Werkstoff, der auf einen härteren Grundwerkstoff des Arretierungselements aufgespritzt wird oder als selbstständiges Bauteil aufgesetzt, aufgeklippst und ggf. anderweitig befestigt werden kann.

Gemäß einer Ausgestaltung der Erfindung wird vorgeschlagen, dass das Arretierungselement im montierten Zustand an einem Ende mit einem Flansch am Antriebselement anliegt und sich zu seinem anderen Ende hin stufenweise verjüngt, sodass der sich an den Flansch anschließende größere Querschnitt in dem Langloch steckt, während ein schmaleres Ende in eine Montageöffnung der Fahrzeugkarosserie eingreift. Die Stufe liegt stirnseitig am Rand der Montageöffnung in der Fahrzeugkarosserie an. Dadurch wird erreicht, dass das Antriebselement im Bereich des Arretierungselements einen sicheren Abstand zur Fahrzeugkarosserie hat, und die Gefahr einer Schallbrücke vermieden wird. Dabei kann die dämpfende Schicht den Grundwerkstoff des Arretierungselements sowohl im Bereich des Langlochs als auch im Bereich der Montageöffnung nach außen hin abdecken. Es reicht aber aus, wenn die Schicht nur in dem Bereich der Montageöffnung am Arretierungselement vorgesehen ist und für eine Schwingungsentkopplung sorgt, während im Bereich des Langlochs das Arretierungselement mit dem Grundwerkstoff, der zweckmäßigerweise ein geeigneter fester Kunststoff ist, unmittelbar an den Rändern des Langlochs anliegt. Das im Querschnitt schmalere Ende ist von der dämpfenden Schicht überzogen, die in vorteilhafter Weise zwei Wülste aufweist. Somit wird das Arretierungselement nach Art einer Klippverbindung in der Montageöffnung der Fahrzeugkarosserie gehalten und das Fahrzeugkarosserieblech im Randbereich der Montageöffnung stirnseitig abgedeckt. In vorteilhafter Weise können die Wülste durch Verdickungen des Grundwerkstoffs vorgeformt sein. Die Verdickungen sorgen gleichzeitig für einen sicheren Sitz der dämpfenden Schicht.

Bei einer weiteren Ausgestaltung der Erfindung besitzt das Arretierungselement einen in der ersten Montagerichtung geschlossenen Federbügel, der innen und außen eine dämpfende Schicht besitzt und mit dem geschlossenen Ende in die Montageöffnung der Fahrzeugkarosserie eingreift. Am offenen Ende ist der Federbügel über abgewinkelte Schenkel mit dem Antriebselement verbunden. Die Schenkel bilden mit dem Federbügel einen solchen Winkel, dass sie den Federbügel bei der Montage des Antriebselements in der ersten Montagerichtung zusammenpressen und die inneren dämpfenden Schichten aneinander liegen. Die äußeren dämpfenden Schichten werden in der zweiten Montagerichtung an den Rand der Montageöffnung gedrückt. Das geschlossene Ende kann eine Wulst bilden, die mit dem Rand der Montageöffnung verrastet.

Während in der Regel mehrere Befestigungselemente erforderlich sind, genügt für eine Scheibenwischvorrichtung ein Arretierungselement. Es kann getrennt von den Befestigungselementen angeordnet werden. In vorteilhafter Weise wird gemäß einer Ausgestaltung der Erfindung das Arretierungselement mit einem Befestigungselement kombiniert, indem es im montierten Zustand an der in der zweiten Montagerichtung gesehen hinten liegenden Seite des Befestigungselements den Zwischenraum zwischen einem Befestigungsblock und dem Rand der Aufnahmeöffnung überbrückt. Dadurch werden Bauteile eingespart und/oder vereinfacht.

Grundsätzlich kann das Arretierungselement ein separates Bauteil sein, das im Wesentlichen unnachgiebig ist und in den Zwischenraum gesteckt wird. Dabei gibt der elastische Befestigungsblock nach. Zweckmäßigerweise ist das Arretierungselement am Befestigungsblock angebunden. Gemäß einer Ausgestaltung der Erfindung wird vorgeschlagen, dass das Arretierungselement als Verriegelungsblock gestaltet ist, der in der ersten Montagerichtung relativ zum Befestigungsblock versetzt angeordnet und verschoben werden kann, sobald der Befestigungsblock seine Endposition erreicht hat. Der Verriegelungsblock kann über Scherrippen mit dem Befestigungsblock verbunden sein, die bei der Montage entweder elastisch nachgeben, abreißen oder abbrechen, wenn der Verriegelungsblock relativ zum Befestigungsblock verschoben wird. Bei einer anderen Ausgestaltung ist der Verriegelungsblock über eine Längsführung, zum Beispiel eine Schwalbenschwanzführung, mit dem Befestigungsblock verbunden.

Bei der Montage ist der Verriegelungsblock in der ersten Montagerichtung versetzt zum Befestigungsblock angeordnet, sodass dieser in die Aufnahmeöffnung eingeführt und in die zweite Montagerichtung bewegt werden kann. Sobald die Endlage erreicht ist, wird der Verriegelungsblock in der ersten Montagerichtung um das Versatzstück verschoben; sodass er nunmehr den Zwischenraum in der Aufnahmeöffnung ausfüllt. Damit sich der Verriegelungsblock nicht aus der Aufnahmeöffnung lösen kann, wird er zweckmäßigerweise durch Rastelemente am Rande der Aufnahmeöffnung verrastet.

Eine weitere Möglichkeit besteht darin, dass das Arretierungselement ein entgegen der ersten Montagerichtung nachgiebiger Riegel ist. Während des ersten Teils der Montage weicht der Riegel entgegengesetzt der ersten Montagerichtung aus und rastet mit einem Rasthaken am Ende der zweiten Montagebewegung des Befestigungsblocks in die Aufnahmeöffnung ein. Der Riegel besitzt zweckmäßigerweise an seinem freien Ende einen Anschlag, der im montierten Zustand an einem Rand der Aufnahmeöffnung anliegt und die Rastbewegung begrenzt. Im montierten Zustand verläuft der Riegel annähernd parallel zur Aufnahmeöffnung. Dadurch wird der Riegel im Wesentlichen in Längsrichtung belastet, wobei die Biegemomente und Knickkräfte gering sind.

### Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

Fig. 1 eine Antriebsvorrichtung einer erfindungsgemäßen Scheibenwischvorrichtung in einer schematischen Darstellung,
Fig. 2 einen Längsschnitt durch ein Arretierungselement einer Antriebsvorrichtung entsprechend der Linie II-II in Fig. 1 während der Montage,
Fig. 3 einen Schnitt entsprechend Fig. 2 im montierten Zustand des Arretierungselements,
Fig. 4 und Fig. 5 eine Variante zu Fig. 2 und Fig. 3,
Fig. 6 und Fig. 7 eine Variante zu Fig. 2 und Fig. 3,
Fig. 8 ein Befestigungselement mit einem Befestigungsblock und einem Verriegelungsblock in einem halb montierten Zustand,
Fig. 9 ein Befestigungselement nach Fig. 8 im montierten Zustand,
Fig. 10 bis Fig. 13 eine Variante zu Fig. 8 und Fig. 9 in verschiedenen Montageschritten und
Fig. 14 bis Fig. 16 eine Variante zu Fig. 8. Fig. 9 in verschiedenen Montageschritten.

### Beschreibung, der Ausführungsbeispiele

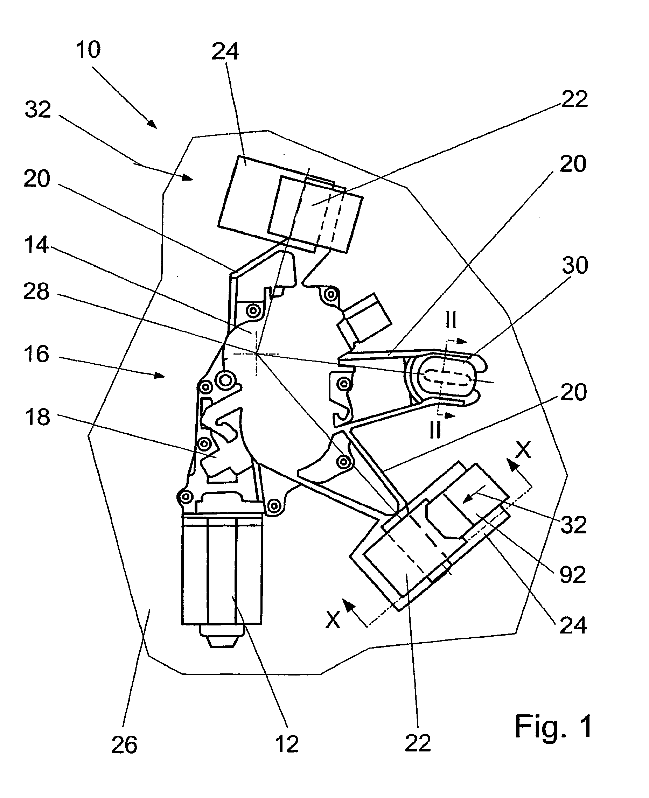

In Fig. 1 ist eine Scheibenwischvorrichtung 10 eines Heckscheibenwischers eines Kraftfahrzeugs in einer schematischen Darstellung gezeigt. Natürlich ist die Erfindung in keiner Weise auf Heckscheibenwischer beschränkt. Sie kann problemlos auf Frontscheibenwischer angewendet werden. Die Scheibenwischvorrichtung 10 umfasst einen Elektromotor 12 mit einem Getriebe 14, die zusammen ein Antriebselement 16 bilden. Das Antriebselement 16 weist ein Gehäuse 18 auf, das teilweise aus gegossenem Material ist und Befestigungsarme 20 besitzt. An den Enden von zwei Befestigungsarmen 20 sind Befestigungselemente 22 angeordnet, während an dem Ende eines weiteren Befestigungsarms 20 ein Arretierungselement 30 vorgesehen ist.

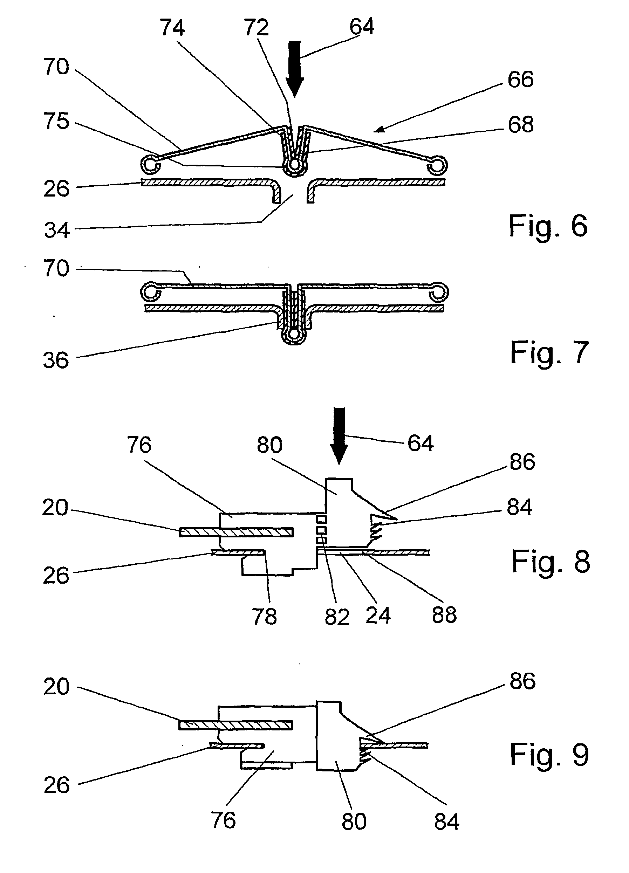

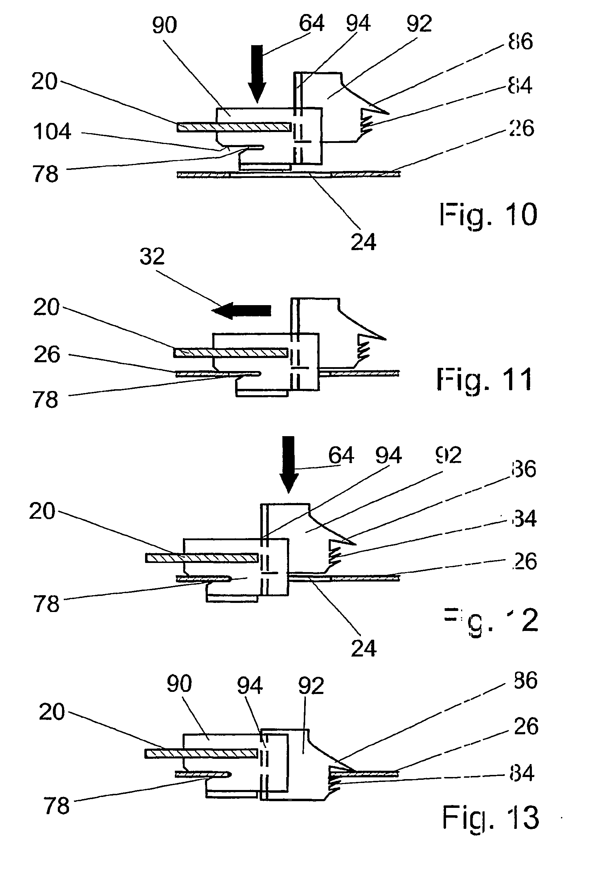

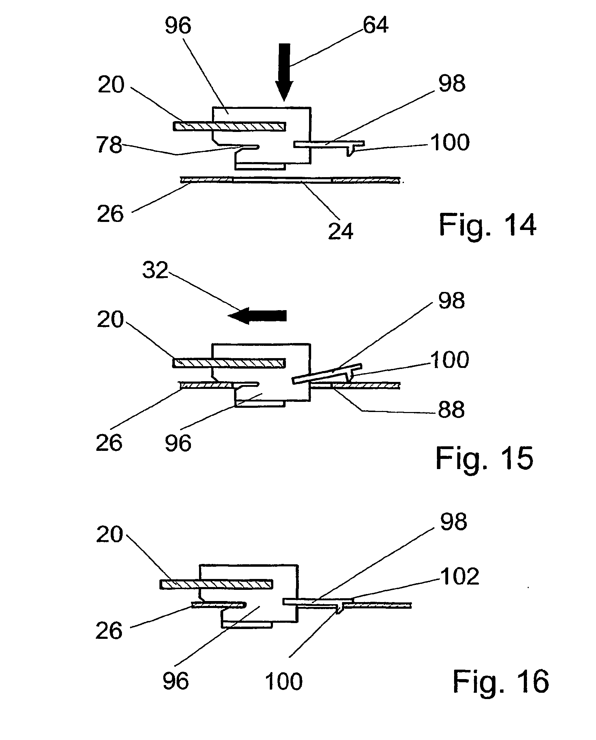

Die Befestigungselemente 22 bestehen im Wesentlichen aus einem Befestigungsblock 76 (Fig. 8), 90 (Fig. 10), 96 (Fig. 14), der an dem jeweiligen Befestigungsarm 20 befestigt ist, und aus einem schwingungsdämpfenden, gummielastischen Material hergestellt ist. Für die Befestigungselemente 22 sind an einer Karosserie 26 des Fahrzeugs Aufnahmeöffnungen 24 vorgesehen. Diese sind in der Regel Öffnungen im Karosserieblech oder in einer mit dem Karosserieblech fest verbundenen Haltevorrichtung.

Die Aufnahmeöffnungen 24 liegen in einer Ebene quer zu einer ersten Montagerichtung 64. Sie können auch auf mehrere Ebenen verteilt angeordnet sein, die zueinander parallel verlaufen. Die Befestigungsblöcke 76, 90, 96 werden in der ersten Montagerichtung 64 in die Aufnahmeöffnungen 24 eingesetzt und anschließend in einer zweiten Montagerichtung 32 quer dazu bewegt, wobei ein Schlitz 78 die Fahrzeugkarosserie 26 am Rand der Montageöffnung 24 übergreift. Zweckmäßigerweise liegt die erste Montagerichtung 64 achsparallel zu einer Abtriebswelle 28 des Antriebselements 16. Die zweite Montagerichtung 32 kann dann eine Drehbewegung um die Abtriebswelle 28 sein, wobei die Aufnahmeöffnungen 24 und die Befestigungsblöcke 76, 90, 96 mit ihren Schlitzen 78 tangential zu Kreisen um die Abtriebswelle 28 liegen. Bei einer solchen Anordnung bleibt die Ausrichtung und Lage der Abtriebswelle 28 bei der Montage im Wesentlichen erhalten, und die Öffnung für die Abtriebswelle 28 in der Fahrzeugkarosserie 26 kann einfach abgedichtet werden.

Nachdem die Befestigungsblöcke 76, 90, 96 in der zweiten Montagerichtung 32 ihre Endlage erreicht haben, wird diese Position durch ein Arretierungselement 30, 52, 66, 92, 98 fixiert. Für eine Scheibenwischvorrichtung ist nur ein Arretierungselement 30, 52, 66, 92, 98 erforderlich. In Fig. 1 ist ein Arretierungselement 30 gezeigt, das unabhängig vom Befestigungselement 22 angeordnet ist, und ein Arretierungselement in Form eines Verriegelungsblocks 92, das in Kombination mit dem Befestigungselement 22 verwendet wird. Alle Arretierungselemente 30, 52, 66, 92, 98 können einzeln oder in Kombination miteinander verwendet werden.

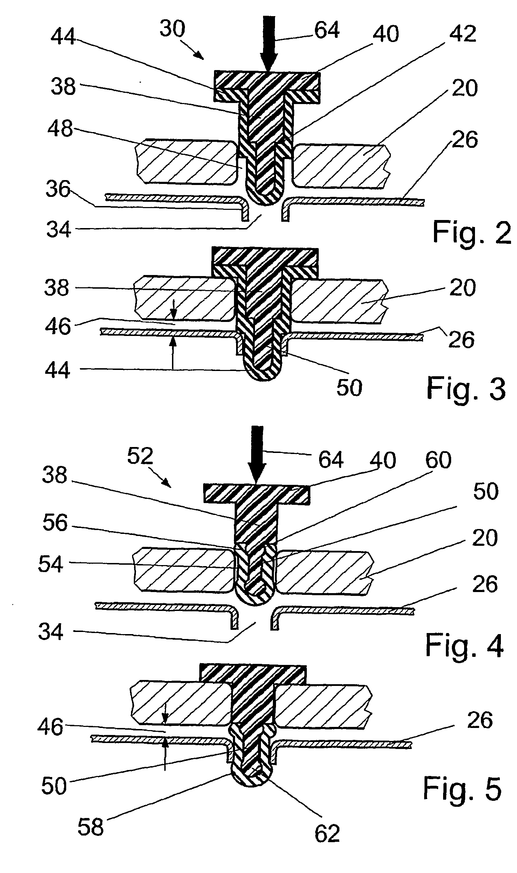

Das Arretierungselement 30 (Fig. 2) besitzt einen Kern 38 aus einem festen Werkstoff, z.B. Kunststoff. Es hat einen länglichen Querschnitt, der bei der Ausführung nach Fig. 1 radial zur Abtriebswelle 28 ausgerichtet ist. Das Arretierungselement 30 besitzt einen Flansch 40, mit dem es sich im montierten Zustand am Befestigungsarm 20 abstützt. An den Flansch 40 schließt sich zur Karosserie 26 hin ein gestufter Teil an, dessen größerer Querschnitt in einem Langloch 48 des Befestigungsarms 20 und dessen Ende 50 mit einem kleineren Querschnitt in einer Montageöffnung 34 der Fahrzeugkarosserie 26 geführt ist. Die Ränder der Öffnung 34 der Fahrzeugkarosserie 26 sind in der ersten Montagerichtung 64 zu einem Kragen 36 umgebördelt. Der Kern 38 des Arretierungselements 30 ist von dem Ende 50 mit dem geringeren Querschnitt bis zum Flansch 40 mit einer schwingungsdämpfenden Schicht 44 umgeben, sodass der Befestigungsarm 20 von der Karosserie 26 schwingungstechnisch entkoppelt ist. Die Schicht 44 kann auf den festeren Kern 38 aufgespritzt sein oder von einem separaten Bauteil gebildet werden, das über den festeren Kern 38 geschoben wird. Da der festere Kern 38 in der ersten Montagerichtung 64 eine Stufe 42 besitzt, ist auch die Schicht 44 entsprechend gestuft ausgebildet, sodass sich die Stufe im montierten Zustand (Fig. 3) an den Rand der Montageöffnung 34 anlegt und einen Abstand 46 zwischen dem Befestigungsarm 20 und der Karosserie 26 sichert.

Das Arretierungselement 52 nach Fig. 4 und Fig. 5 ist ähnlich gestaltet wie das Arretierungselement 30. Allerdings liegt hierbei der größere Querschnitt des Kerns 38 unmittelbar, ohne schwingungsdämpfende Schicht am Langloch 48 an, während die schwingungsdämpfende Schicht 54 nur bis in den Bereich der Stufe 42 reicht. Das Ende 50 mit dem reduzierten Querschnitt weist im Bereich der Stufe 42 eine Verdickung 60 und nach außen eine Verdickung 62 auf. Die Verdickungen 60, 62 bewirken, dass die schwingungsdämpfende Schicht 54 in diesen Bereichen Wülste 56, 58 bildet. Der Abstand zwischen den Wülsten 56, 58 ist so bemessen, dass das Arretierungselement 52 in der Montageöffnung 34 der Fahrzeugkarosserie 26 einklippst und einen ausreichenden Abstand 46 zwischen der Fahrzeugkarosserie 26 und dem Befestigungsarm 20 gewährleistet. Ferner sichern die Verdickungen 60, 62 einen festen Sitz der schwingungsdämpfenden Schicht 54, selbst wenn diese als separates Bauteil ausgebildet ist.

Das Arretierungselement 66 nach Fig. 6 und Fig. 7 besitzt einen Federbügel 68 mit einem gebogenen Ende 75. An den freien Enden des Federbügels 68 schließen sich abgewinkelte Schenkel 70 an, die in nicht näher dargestellter Weise mit dem Befestigungsarm 20 verbunden sind. Der Federbügel 68 besitzt innen eine schwingungsdämpfende Schicht 72 und außen eine schwingungsdämpfende Schicht 74, die das gebogene Ende 75 umfasst. Dieses ist gegenüber der Montageöffnung 34 verdickt, sodass das Arretierungselement 66 am Kragen 36 der Montageöffnung 34 einrastet. Während der Montage des Arretierungselements 66 in der ersten Montagerichtung 64 gehen die Schenkel 70 in eine gestreckte Lage über, wobei sie den Federbügel 68 zusammen und die inneren schwingungsdämpfenden Schichten 72 gegeneinander pressen.

Bei den Ausführungen nach Fig. 8 bis Fig. 16 sind die Arretierungselemente 80, 92, 98 mit dem Befestigungselement 76, 90, 96 kombiniert. Bei der Ausführung nach Fig. 8 und Fig. 9 ist das als Verriegelungsblock 80 ausgebildete Arretierungselement über Scherrippen 82 mit dem Befestigungsblock 76 verbunden, und zwar um einen solchen Betrag entgegen der ersten Montagerichtung 64 versetzt, dass zunächst der Befestigungsblock 76, der am Befestigungsarm 20 befestigt ist, in die Montageöffnung 24 eingesetzt und in die zweite Montagerichtung 32 verschoben werden kann, sodass der Schlitz 78 die Karosserie 26 am Rand der Montageöffnung 24 umfassen kann. In dieser Position wird der Verriegelungsblock 80 in der ersten Montagerichtung 64 in die Montageöffnung 24 eingeschoben, wobei die Scherrippen 82 abreißen, abbrechen oder sich so weit elastisch verformen, dass der Verriegelungsblock 80 den Zwischenraum zwischen dem Befestigungsblock 76 und einem Rand 88 der Aufnahmeöffnung 24 ausfüllen kann (Fig. 9). Dabei wird der Arretierungsblock am Rand 88 durch einen Anschlag 86 und Rasthaken 84 gehalten und gesichert.

Fig. 10 bis Fig. 13 zeigen eine ähnliche Ausführung. Hierbei wird ein Verriegelungsblock 92 über eine Längsführung 94 in der ersten Montagerichtung 64 verschiebbar in einem Befestigungsblock 90 geführt. Der Befestigungsblock 90 ist am Befestigungsarm 20 befestigt und besitzt einen Schlitz 78. In einem ersten Montageschritt (Fig. 11) wird der Befestigungsblock 90 in die Montageöffnung 24 eingesetzt, bis die obere Flanke 104 des Schlitzes 78 an der zugewandten Seite der Karosserie 26 anliegt. In einem weiteren Verfahrensschritt wird der Befestigungsblock 90 mit dem Verriegelungsblock 92 in die zweite Montagerichtung 32 gedreht, bis die Endposition (Fig. 12) erreicht ist und der Schlitz 78 die Karosserie 26 am Rand der Aufnahmeöffnung 24 umfasst. In einem weiteren Montageschritt wird der Verriegelungsblock 92 in der Längsführung 94 in der ersten Montagerichtung 64 verschoben, bis der Anschlag 86 an der Karosserie 26 anliegt und einer der Rasthaken 84 die Position von der Gegenseite der Fahrzeugkarosserie 26 sichert.

Bei der Ausführung nach Fig. 14 bis Fig. 16 dient als Arretierungselement ein Riegel 98, der an der dem Schlitz 78 abgewandten Seite des Befestigungsblocks 96 entgegen der ersten Montagerichtung 64 nachgiebig angeordnet ist. Dabei kann der Riegel 98 in dem Befestigungsblock 96 aus elastischem Material fest eingesetzt sein und die Nachgiebigkeit durch die Elastizität des Befestigungsblocks 96 bewirkt werden. Eine andere Möglichkeit besteht darin, dass der Riegel 98 selbst eine ausreichende Elastizität in der ersten Montagerichtung 64 aufweist oder gelenkig mit dem Befestigungsblock 96 verbunden ist. Der Befestigungsblock 96 wird in einem ersten Montageschritt in der ersten Montagerichtung 64 in die Aufnahmeöffnung 24 der Fahrzeugkarosserie 26 eingesetzt, bis die obere Flanke 104 des Schlitzes 78 an der zugewandten Seite der Fahrzeugkarosserie 26 anliegt. Dabei gibt der Riegel 98, der mit einem abgewinkelten Rasthaken 100 an der Fahrzeugkarosserie 26 anliegt, entgegen der ersten Montagerichtung 64 nach. In einem weiteren Montageschritt in der zweiten Montagerichtung wird der Rand der Montageöffnung 24 in den Schlitz 78 geschoben. Erreicht der Befestigungsblock seine Endposition in der zweiten Montagerichtung 32 (Fig. 16), schnappt der Riegel 98 mit einem Rasthaken 100 in die Aufnahmeöffnung 24 ein, wobei ein Anschlag 102 am freien Ende Riegels 98 an der Fahrzeugkarosserie 26 zur Anlage kommt. In dieser Position überbrückt der Riegel 98 den Abstand zwischen dem Befestigungsblock 96 und dem Rand 88 der Aufnahmeöffnung 24. Dabei ist es zweckmäßig, dass der Riegel 98 in einer Ebene möglichst nahe der Aufnahmeöffnung 24 liegt, sodass der Riegel 98 in Längsrichtung durch keine nennenswerten Biegemomente belastet wird.

## Patentansprüche

1. Scheibenwischvorrichtung (10), insbesondere für ein Kraftfahrzeug, mit mindestens einem an der Fahrzeugkarosserie (26) befestigbaren Antriebselement (16) mit einer Abtriebswelle (28) und mindestens zwei axial starr angeordneten Befestigungselementen (22), die in Aufnahmeöffnungen (24) an der Fahrzeugkarosserie (26) einzugreifen vermögen und zumindest ein Dämpfungselement (76, 90, 96) zur Dämpfung mechanischer Schwingungen aufweisen, **dadurch gekennzeichnet, dass** die Dämpfungselemente (76, 90, 96) Befestigungsblöcke aus einem gummielastischen Werkstoff sind, die am Antriebselement (16) befestigt sind, Schlitze (78) aufweisen und derart angeordnet sind, dass sie in einer ersten Montagerichtung (64) in die Aufnahmeöffnungen (24) einsetzbar sind und durch eine Bewegung in einer zweiten Montagerichtung (32) quer zur ersten den Rand (88) der Aufnahmeöffnung (24) mit einem Schlitz (78) übergreifen, und dass ein Arretierungselement (30, 52, 66, 80, 92, 98) die Endlage in der zweiten Montagerichtung (32) sichert.

2. Scheibenwischervorrichtung noch Anspruch 1, **dadurch gekennzeichnet, dass** die in der ersten Montagerichtung (64) hinten liegende Flanke (104) des Schlitzes (78) gegenüber der anderen Flanke in der zweiten Montagerichtung (32) ein Stück vorsteht und einen Anschlag bildet.

3. Scheibenwischvorrichtung (10) nach Anspruch 1 oder 2, **dadurch gekennzeichnet, dass** die Befestigungselemente (22) jeweils im Wesentlichen auf Tangenten eines Kreises um die Abtriebswelle (28) oder eine zu dieser im Wesentlichen parallelen Achse angeordnet sind und die Bewegung in der zweiten Montagerichtung (32) eine Drehbewegung um die Abtriebswelle (28) bzw. der Achse ist.

4. Scheibenwischvorrichtung (10) nach einem der vorhergehenden Ansprüche, **dadurch gekennzeichnet, dass** das Arretierungselement (30, 52) ein im Querschnitt länglicher Bolzen ist, der an seinem Umfang eine dämpfende Schicht (44, 54) aufweist und im montierten Zustand durch ein Langloch (48) im Antriebselement (16) und eine Montageöffnung (34) der Fahrzeugkarosserie (26) greift, wobei sich das Langloch (48) bzw. die Montageöffnung (34) quer zur zweiten Montagerichtung (32) erstrecken.

5. Scheibenwischvorrichtung (10) nach Anspruch 4, **dadurch gekennzeichnet, dass** das Arretierungselement (30, 52) im montierten Zustand an einem Ende mit einem Flansch (40) am Antriebselement (16) anliegt und sich zu seinem anderen Ende (50) hin stufenweise verjüngt, sodass eine Stufe (42) am Rand der Montageeröffnung (34) anliegt.

6. Scheibenwischvorrichtung (10) nach Anspruch 4 oder 5, **dadurch gekennzeichnet, dass** die dämpfende Schicht (54) des Arretierungselements (52) nur vom freien Ende bis zur Stufe (42) reicht und an ihren Enden Wülste (56, 58) aufweist.

7. Scheibenwischvorrichtung (10) nach Anspruch 6, **dadurch gekennzeichnet, dass** die Wülste (56, 58) durch Verdickungen (60, 62) des Grundwerkstoffs des Arretierungselements (52) gebildet werden.

8. Scheibenwischvorrichtung (10) nach einem der Ansprüche 1 bis 3, **dadurch gekennzeichnet, dass** das Arretierungselement (66) einen Federbügel (68) besitzt, der über abgewinkelte Schenkel (70) an seinen freien Enden mit dem Antriebselement (16) verbunden ist, wobei der Federbügel (68) eine innere und äußere dämpfende Schicht (72, 74) besitzt und bei der Montage in der ersten Montagerichtung (64) durch die Schenkel (70) zusammengedrückt wird.

9. Scheibenwischvorrichtung (10) nach Anspruch 8, **dadurch gekennzeichnet, dass** der Federbügel (68) an seinem gebogenen Ende (75) eine Verdickung aufweist, mit der er am Rand (36) der Montageöffnung (34) der Fahrzeugkarosserie (26) verrastet.

10. Scheibenwischvorrichtung (10) nach einem der Ansprüche 1 bis 3, **dadurch gekennzeichnet, dass** das Arretierungselement (80, 92, 98) mit einem Befestigungselement (22) kombiniert ist und im montierten Zustand an dessen, in der zweiten Montagerichtung (32) gesehen, hinten liegenden Seite den Zwischenraum zwischen dem Befestigungsblock (76, 90, 96) und der Aufnahmeöffnung (24) überbrückt.

11. Scheibenwischvorrichtung (10) nach Anspruch 10, **dadurch gekennzeichnet, dass** das Arretierungselement (80,92,98) als Verriegelungsblock (80, 92) ausgebildet ist, der in der ersten Montagerichtung (64) relativ zum Befestigungsblock (76, 90) verschoben werden kann.

12. Scheibenwischvorrichtung (10) nach Anspruch. 11, **dadurch gekennzeichnet, dass** der Verriegelungsblock (80) über Scherrippen (82) mit dem Befestigungsblock (76) verbunden ist.

13. Scheibenwischvorrichtung (10) nach Anspruch 10, **dadurch gekennzeichnet, dass** der Verriegelungsblock (92) über eine Längsführung (94) mit dem Befestigungsblock (90) verbunden ist.

14. Scheibenwischvorrichtung (10) nach einem der Ansprüche 11 bis 13, **dadurch gekennzeichnet, dass** der Verriegelungsblock (80, 92) zum Rand (88) der Aufnahmeöffnung (44) hin Rastelemente (84, 86) besitzt.

15. Scheibenwischvorrichtung (10) nach Anspruch 10, **dadurch gekennzeichnet, dass** das Arretierungselement (98) ein entgegen der ersten Montagerichtung (64) nachgiebiger Riegel (98) ist, der mit einem Rasthaken (100) am Ende der zweiten Montagebewegung (32) in die Aufnahmeöffnungen (24) einrastet.

16. Scheibenwischvorrichtung (10) nach Anspruch 15, **dadurch gekennzeichnet, dass** der Riegel (98) an seinem freien Ende einen Anschlag (102) besitzt und im montierten Zustand annähernd parallel zur Aufnahmeöffnung (24) verläuft.

17. Scheibenwischvorrichtung (10) nach einem der vorhergehenden Ansprüche, **dadurch gekennzeichnet, dass** der Grundwerkstoff des Arretierungselements (30, 52, 66, 80, 92, 98) ein weitgehend unnachgiebiger Kunststoff ist.

## Claims

1. Windscreen wiper device (10), especially for a motor vehicle, with at least one driving element (16) which can be fastened to the vehicle body (26) and has an output shaft (28), and at least two fastening elements (22) which are arranged axially such that they are rigid, are capable of engaging in receiving openings (24) on the vehicle body (26) and have at least one damping element (76, 90, 96) for damping mechanical vibrations, **characterized in that** the damping elements (76, 90, 96) are fastening blocks made of a rubber-elastic material, which fastening blocks are fastened to the driving element (16), have slots (78) and are arranged in such a manner that they can be inserted in a first installation direction (64) into the receiving openings (24), and, by means of a movement in a second installation direction (32) transversely with respect to the first direction, engage by means of a slot (78) over the edge (88) of the receiving opening (24), and **in that** a retaining element (30, 52, 66, 80, 92, 98) secures the final position in the second installation direction (32).

2. Windscreen wiper device according to Claim 1, **characterized in that** flank (104) of the slot (78) which is located at the rear in the first installation direction (64) projects for a distance in relation to the other flank in the second installation direction (32) and forms a stop.

3. Windscreen wiper device (10) according to Claim 1 or 2, **characterized in that** the fastening elements (22) are each arranged substantially at tangents of a circle about the output shaft (28) or about an axis substantially parallel thereto, and the movement in the second installation direction (32) is a rotational movement about the output shaft (28) or the axis.

4. Windscreen wiper device (10) according to one of the preceding claims, **characterized in that** the retaining element (30, 52) is a bolt which is oblong in cross section, has a damping layer (44, 54) on its circumference and, in the fitted state, reaches through an elongated hole (48) in the driving element (16) and through an installation opening (34) in the vehicle body (26), the elongated hole (48) and the installation opening (34) extending transversely with respect to the second installation direction (32).

5. Windscreen wiper device (10) according to Claim 4, **characterized in that**, in the fitted state, the retaining element (30, 52) bears at one end with a flange (40) against the driving element (16) and tapers in a stepwise manner towards its other end (50) such that a step (42) bears against the edge of the installation opening (34).

6. Windscreen wiper device (10) according to Claim 4 or 5, **characterized in that** the damping layer (54) of the retaining element (52) reaches only from the free end as far as the step (42) and has beads (56, 58) at its ends.

7. Windscreen wiper device (10) according to Claim 6, **characterized in that** the beads (56, 58) are formed by thickened portions (60, 62) of the basic material of the retaining element (52).

8. Windscreen wiper device (10) according to one of Claims 1 to 3, **characterized in that** the retaining element (66) has a spring clip (68) which is connected at its free ends to the driving element (16) via angled limbs (70), the spring clips (68) having an inner and outer damping layer (72, 74) and, during installation in the first installation direction (64), being pressed together by the limbs (70).

9. Windscreen wiper device (10) according to Claim 8, **characterized in that** the spring clip (68), at its bent end (75), has a thickened portion with which it latches against the edge (36) of the installation opening (34) in the vehicle body (26).

10. Windscreen wiper device (10) according to one of Claims 1 to 3, **characterized in that** the retaining element (80, 92, 98) is combined with a fastening element (22) and, in the fitted state on the side thereof which is located at the rear, as seen in the second installation direction (32), spans the intermediate space between the fastening block (76, 90, 96) and the receiving opening (24).

11. Windscreen wiper device (10) according to Claim 10, **characterized in that** the retaining element (80, 92, 98) is designed as a locking block (80, 92) which, in the first installation direction (64), can be displaced relative to the fastening block (76, 90).

12. Windscreen wiper device (10) according to Claim 11, **characterized in that** the locking block (80) is connected to the fastening block (76) via shearing ribs (82).

13. Windscreen wiper device (10) according to Claim 10, **characterized in that** the locking block (92) is connected to the fastening block (90) via a longitudinal guide (94).

14. Windscreen wiper device (10) according to one of Claims 11 to 13, **characterized in that** the locking block (80, 92) has latching elements (84, 86) towards the edge (88) of the receiving opening (44).

15. Windscreen wiper device (10) according to Claim 10, **characterized in that** the locking element (98) is a latch (98) which is flexible counter to the first installation direction (64) and, at the end of the second installation movement (32), latches with a latching hook (100) into the receiving openings (24).

16. Windscreen wiper device (10) according to Claim 15, **characterized in that** the latch (98) has a stop (102) at its free end and, in the fitted state, runs approximately parallel to the receiving opening (24).

17. Windscreen wiper device (10) according to one of the preceding claims, **characterized in that** the basic material of the locking element (30, 52, 66, 80, 92, 98) is a substantially inflexible plastic.

## Revendications

1. Système d'essuie-glace (10) notamment pour un véhicule automobile, comportant au moins un élément d'entraînement (16) qui se fixe à la carrosserie (26) du véhicule et comporte un arbre de sortie (28) et au moins deux éléments de fixation (22) rigides axialement, destinés à venir dans des orifices de réception (24) de la carrosserie (26) du véhicule et comportant au moins un élément amortisseur (76, 90, 96) pour amortir des oscillations mécaniques,
**caractérisé en ce que**
les éléments amortisseurs (76, 90, 96) sont des blocs de fixation réalisés en un matériau élastique comme du caoutchouc, qui sont fixés à l'élément d'entraînement (16), comportent des fentes (78) et sont installés de façon que dans une première direction de montage (64) ils puissent se placer dans les orifices de réception (24) et par déplacement dans une seconde direction de montage (32) transversale à la première ils chevauchent le bord (88) de l'orifice de réception (24) avec une fente (78) et
un élément de blocage (30, 52, 66, 80, 92, 98) fixe la position de fin de course dans la seconde direction de montage (32).

2. Système d'essuie-glace selon la revendication 1,
**caractérisé en ce que**
le flanc (104) de la fente (78) qui se situe derrière dans la première direction de montage (64) déborde de l'autre flanc dans la seconde direction de montage (32) d'une certaine distance et forme une butée.

3. Système d'essuie-glace (10) selon la revendication 1 ou 2,
**caractérisé en ce que**
les éléments de fixation (22) sont installés pratiquement sur les tangentes d'un cercle autour de l'arbre de sortie (28) ou d'un axe pratiquement parallèle à celui-ci et le mouvement dans la seconde direction de montage (32) est un mouvement de rotation autour de l'arbre de sortie (28) ou de l'axe.

4. Système d'essuie-glace (10) selon l'une des revendications précédentes,
**caractérisé en ce que**
l'élément de blocage (30, 52) est un goujon de section allongée dont la périphérie est munie d'une couche d'amortissement (44, 54) et qui, à l'état monté, traverse un trou oblong (48) de l'élément d'entraînement (16) et pénètre dans un orifice de montage (34) de la carrosserie (26) du véhicule, le trou oblong (48) ou l'orifice de montage (34) s'étendant transversalement à la seconde direction de montage (32).

5. Système d'essuie-glace (10) selon la revendication 4,
**caractérisé en ce que**
l'élément de blocage (30, 52) s'appuie à l'état monté, contre une extrémité avec une bride (40) contre l'élément d'entraînement (16) et va en rétrécissant de manière graduée vers l'autre extrémité (50) pour qu'un gradin (42) s'appuie contre le bord de l'orifice de montage (34).

6. Système d'essuie-glace (10) selon la revendication 4 ou 5,
**caractérisé en ce que**
la couche d'amortissement (54) de l'élément de blocage (52) ne s'étend que de l'extrémité libre jusqu'au gradin (42) et présente des bourrelets (56, 58) à ses extrémités.

7. Système d'essuie-glace (10) selon la revendication 6,
**caractérisé en ce que**
les bourrelets (56, 58) sont formés par des renforcements (60, 62) du matériau de base de l'élément de blocage (52).

8. Système d'essuie-glace (10) selon l'une des revendications 1 à 3,
**caractérisé en ce que**
l'élément de blocage (66) comporte un arceau à ressort (68) relié par des branches pliées (70) à son extrémité libre à l'élément d'entraînement (16),
l'arceau élastique (68) ayant une couche intérieure et une couche extérieure d'amortissement (72, 74) et au montage dans la première direction de montage (64) il est comprimé par les branches (70).

9. Système d'essuie-glace (10) selon la revendication 8,
**caractérisé en ce que**
l'arceau à ressort (68) présente un renforcement à son extrémité courbée (75) par lequel il s'accroche contre le bord (36) de l'orifice de montage (34) de la carrosserie (26) du véhicule.

10. Système d'essuie-glace (10) selon l'une des revendications 1 à 3,
**caractérisé en ce que**
l'élément de blocage (80, 92, 98) est combiné à un élément de fixation (22) et à l'état monté de ce dernier, vu dans la seconde direction de montage (32), il chevauche le côté arrière de l'intervalle entre le bloc de fixation (76, 90, 96) et l'orifice de réception (24).

11. Système d'essuie-glace (10) selon la revendication 10,
**caractérisé en ce que**
l'élément de blocage (80, 92, 98) est réalisé sous la forme d'un bloc de verrouillage (80, 92) qui peut être déplacé dans la première direction de montage (64) par rapport au bloc de fixation (76, 90).

12. Système d'essuie-glace (10) selon la revendication 11,
**caractérisé en ce que**
le bloc de verrouillage (80) est relié au bloc de fixation (76) par des nervures de cisaillement (82).

13. Système d'essuie-glace (10) selon la revendication 10,
**caractérisé en ce que**
le bloc de verrouillage (92) est relié au bloc de fixation (90) par un guide longitudinal (94).

14. Système d'essuie-glace (10) selon l'une des revendications 11 à 13,
**caractérisé en ce que**
le bloc de verrouillage (80, 92) comporte des éléments d'enclipsage (84, 86) en direction du bord (88) de l'orifice de réception (44).

15. Système d'essuie-glace (10) selon la revendication 10,
**caractérisé en ce que**
l'élément de blocage (98) est un verrou (98) qui cède dans la direction opposée à la première direction de montage (64), ce verrou étant accroché par un crochet d'enclipsage (100) à l'extrémité du second mouvement de montage (32) dans les orifices de réception (24).

16. Système d'essuie-glace (10) selon la revendication 15,
**caractérisé en ce que**
le verrou (98) comporte une butée (102) à son extrémité libre et à l'état monté il est pratiquement parallèle à l'orifice de réception (24).

17. Système d'essuie-glace (10) selon l'une des revendications précédentes,
**caractérisé en ce que**
le matériau de base de l'élément de blocage (30, 52, 66, 80, 92, 98) est une matière plastique pratiquement rigide.
